Europäisches Patentamt

European Patent Office

Office européen des brevets

(19)

(11) Veröffentlichungsnummer: **0 243 614 B1**

(12) **EUROPÄISCHE PATENTSCHRIFT**

(45) Veröffentlichungstag der Patentschrift: **25.09.91**

(51) Int. Cl.⁵: **C04B 35/04**

(21) Anmeldenummer: **87102890.8**

(22) Anmeldetag: **28.02.87**

(54) **Feuerfestzusammensetzung und unter Verwendung derselben hergestellter Feuerfeststein.**

(30) Priorität: **30.04.86 DE 3614604**

(43) Veröffentlichungstag der Anmeldung:
**04.11.87 Patentblatt 87/45**

(45) Bekanntmachung des Hinweises auf die
Patenterteilung:
**25.09.91 Patentblatt 91/39**

(84) Benannte Vertragsstaaten:
**AT DE ES FR GB GR IT NL SE**

(56) Entgegenhaltungen:
**US-A- 3 333 971**
**US-A- 3 514 302**

(73) Patentinhaber: **Refratechnik GmbH**
**Rudolf-Winkel-Strasse 1**
**W-3400 Göttingen(DE)**

(72) Erfinder: **Weibel, Guido**
**Kleine Strasse 4**
**W-3515 Scheden/Dankelshausen(DE)**
Erfinder: **Bartha, Peter, Dr.**
**Greifswalder Strasse 2**
**W-3406 Bovenden(DE)**

(74) Vertreter: **Goddar, Heinz J., Dr. et al**
**FORRESTER & BOEHMERT Widenmayerstras-**
**se 4/I**
**W-8000 München 22(DE)**

## Beschreibung

Die Erfindung betrifft eine Feuerfestzusammensetzung, insbesondere für einen Feuerfeststein zum Ausmauern von Drehrohröfen für die Zementindustrie, auf Magnesiaspinellbasis, mit einem Gehalt von 10 bis 50 Gew.-% Spinellklinker $(MgO.Al_2O_3)$, 50 bis 90 Gew.% Sintermagnesia und einem Gehalt von 0,5 bis 4 Gew.%, bezogen auf die Gesamtmenge von Spinellklinker und Sintermagnesia, zu 100 Gew.-% genommen, an einem ansatzbildungsfördernden Metalloxid, sowie einen unter Verwendung einer derartigen Zusammensetzung hergestellten Feuerfeststein,
Insbesondere beim Ausmauern von Drehrohröfen, wie sie in wachsendem Maße in der Zementindustrie verwendet werden, werden in der Sinterzone wegen ihrer hervorragenden Eigenschaften mehr und mehr Feuerfeststeine auf Magnesiaspinellbasis eingesetzt. Derartige Magnesiaspinellsteine haben allerdings, wie sich ergeben hat, die Eigenschaft, insbesondere unter ungünstigen Betriebsbedingungen nur wenig zur Ansatzbildung, also dem Bilden eines Ansatzes aus der Klinkerschmelze, zu neigen. Eine gewisse Ansatzbildung ist aber erwünscht, um auf diese Weise sowohl die eigentlichen Feuerfeststeine gegen chemothermische Angriffe der Zementklinkerschmelze zu schützen als auch die Wärmeisolierung nach außen zu verbessern.

Aus der US-A 43 89 492 sind daher bereits eine Feuerfestzusammensetzung sowie ein damit hergestellter Stein der gattungsgemäßen Art bekannt, bei der zur Verbesserung der Ansatzbildung der Magnesiaspinellzusammensetzung, bei welcher die Sintermagnesia in bekannter Weise als Resistor und der Spinell als Elastifizierer dient, Eisenoxid zugesetzt wird. Ein derartiger Eisenoxidzusatz eignet sich zwar dafür, die Ansatzbildung zu fördern, jedoch nur bei verhältnismäßig niedrigen Betriebstemperaturen von bis zu etwa 1450° C. Aus diesem Grunde läßt sich eine verstärkte Ansatzbildung lediglich beim Aufheizen bzw. bei normaler Betriebstemperatur eines Zementdrehrohrofens erzielen, wobei der so gebildete Ansatz aber bei unvermeidbarem Überhitzen wieder verlorengeht, und zwar infolge Aufschmelzens des gebildeten Ansatzes an der Grenzschicht Stein/Ansatz, und dann nicht mehr neu gebildet werden kann, weil die ansatzbildungsfördernden Eigenschaften des Eisenoxidzusatzes bei derart hohen Temperaturen nicht mehr zum Tragen kommen. Außerdem wirkt sich ein derartiger Eisenoxidzusatz in ungünstiger Weise auf die sonstigen Eigenschaften des reinen Magnesiaspinellsteines aus und bringt diesen wieder in die Nähe altbekannter eisenoxidhaltiger Magnesiaprodukte, wie sie zum Beispiel unter dem Handelsnamen RADEX ZA 75 als Magnesiasteine erhältlich sind, mit einem MGO-Gehalt von 76,9 Gew.-%, einem CaO-Gehalt von 1,3 Gew.-%, einem $Fe_2O_3$-Gehalt von 3,5 Gew.-%, einem $Al_2O_3$-Gehalt von 14,9 Gew.-% und einem $SiO_2$-Gehalt von 3,2 Gew.-% (beschrieben in "XXVI. Internationales Feuerfest-Kolloquium",Aachen, 6./7.10.1983, Berichtsband, Seiten 69/70).

Der Erfindung liegt die Aufgabe zugrunde, die bekannte Feuerfestzusammensetzung und den Feuerfeststein der eingangs genannten Art dahingehend zu verbessern, daß eine Förderung der Ansatzbildung auch bei hohen Temperaturen, insbesondere bei Überhitzungen in der Sinterzone von Drehrohröfen für die Zementindustrie, erzielt werden kann.

Diese Aufgabe wird gemäß der Erfindung durch eine Feuerfestzusammensetzung der eingangs genannten Art gelöst, welche dadurch gekennzeichnet ist, daß das Metalloxid Zirkonoxid ist und in einem Korngrößenbereich von < 0,1 mm vorliegt.

Dabei kann vorgesehen sein, daß das Zirkonoxid in einem Korngrößenbereich von < 0,06 mm vorliegt.

Ferner sieht die Erfindung ggf. vor, daß der Zirkonoxidgehalt 1 bis 2 Gew.-% beträgt.

Der Feuerfeststein nach der Erfindung ist dadurch gekennzeichnet, daß er unter Verwendung einer erfindungsgemäßen Feuerfestzusammensetzung hergestellt ist.

Der Erfindung liegt die überraschende Erkenntnis zugrunde, daß es gelingt, die Nachteile des bekannten Eisenoxidzusatzes zur Ansatzbildungsförderung nach dem Stand der Technik zu vermeiden, wenn anstatt von Eisenoxid Zirkonoxid als Zusatz für die Förderung der Ansatzbildung verwendet wird. Hierdurch wird erreicht, daß sich auch bei höheren Temperaturen als denjenigen des normalen Ofenbetriebes eine ausgezeichnete Ansatzbildung ergibt, woraus hervorragende Notlaufeigenschaften resultieren. Es hat sich gezeigt, daß nicht nur die Ansatzbildung gefördert wird, sondern auch die Penetrationstiefe des Steines durch die Zementklinkerschmelze deutlich abgesenkt wird, woraus sich deutlich verlängerte Standzeiten der insbesondere in Zementdrehrohröfen eingesetzten Feuerfeststeine z.B. bei mehrmaligem Abkühlen und wieder Aufheizen des Drehrohrofens mit daraus resultierendem Abfallen oder Zerrieseln des jeweils geschaffenen Ansatzes ergeben.

Aus der DE-A 26 46 430 ist zwar bereits ein Magnesia-Stein mit einem Zirkonoxidzusatz bekannt, jedoch dient dieser bei derartigen Magnesiasteinen dazu, überschüssiges Kalzium unschädlich zu machen, ohne daß sich ein Hinweis auffinden ließe, wonach das Zirkonoxid dort in irgendeiner Weise einen Einfluß auf die Ansatzbildung hätte. Einen Feuerfeststein mit Zirkondioxidzusatz zum Beheben desselben Problems betrifft auch die DE-A 25 07 556. Ferner ist es aus der DE-A 22 49 814 bekannt Zirkonoxid bei Magnesiasteinen als Elastifizierer einzusetzen, jedoch dient das Zirkonoxid dabei als Elastifizierer, als welcher beim erfindungsgemäßen Magnesiaspinellstein der Spinell angesetzt ist, so daß diese Druckschrift dementsprechend ebenfalls keinen Hinweis auf die Verwendbarkeit von Zirkonoxid als ansatzbildungsförderndes Mittel bei Magnesiaspinellsteinen erkennen läßt, zumal dort das Zirkonoxid in Form erratisch verteilter großer Körner eingesetzt wird, während es für die erfindungsgemäße Anwendung notwendig ist, das Zirkonoxid in der Feinkörnung mit Durchmessern < 0,06 mm einzusetzen.

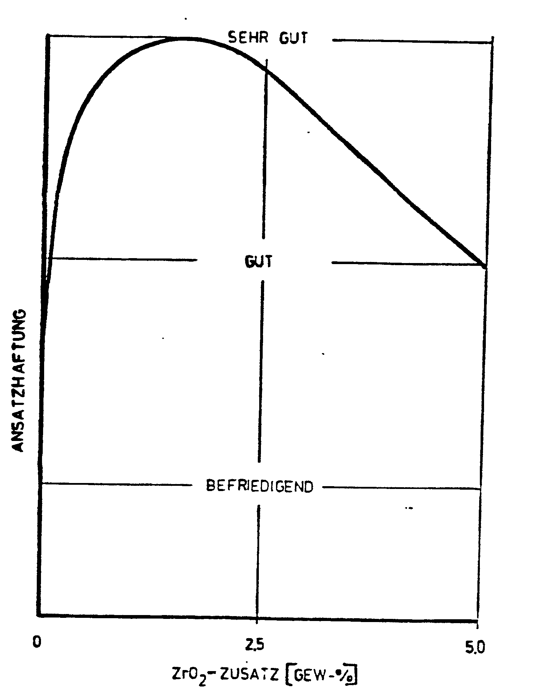

Weitere Merkmale und Vorteile der Erfindung ergeben sich aus der nachstehenden Beschreibung, in der Ausführungsbeispiele anhand der Zeichnung im einzelnen erläutert sind. Dabei zeigt die aus einer einzigen Figur bestehende Zeichnung ein Diagramm, welches die Abhängigkeit der Ansatzbildung vom Zirkonoxidgehalt bei erfindungsgemäßen Feuerfeststeinen wiedergibt.

Beispiel 1:

1000 kg einer Mischung von 78 Gew.-% Magnesiaklinker, 20 Gew.-% Spinellklinker und 2 Gew.-% $ZrO_2$, letzteres mit einer Körnung von < 0,06 mm, wurden in einem üblichen Kornaufbau in der Fraktion 4 - 2 mm, 2 - 1 mm, 1 - 01 mm und < 0,1 mm (Gesamtversatz) in einem Zwangsmischer gemischt, mit 1,5 Gew.-% Wasser und 2 Gew.-% 50 %iger Sulfitablauge vermengt und schließlich auf einer hydraulischen Presse bei einem spezifischen Preßdruck von 140 N/mm² verpreßt. Die erhaltenen Formlinge wurden wie üblich getrocknet und in einem Tunnelofen bei 1700° C, Haltezeit 8 Stunden, gebrannt. Die auf diese Weise hergestellten Feuerfeststeine wurden zum Ausmauern einer Probestrecke in der Sinterzone eines Zementdrehrohrofens eingesetzt. Im Vergleich hierzu wurde ein Teil der Probestrecke einerseits mit zirkonoxidfreien und andererseits zirkonoxidfreien, aber eisenoxidhaltigen Feuerfeststeinen der gleichen Zusammensetzung und Herstellungsbedingungen ausgemauert.

Die Feuerfeststeine nach der Erfindung zeigten nach Ofenstillstand (Betriebsdauer 3 Monate) eine gleichmäßige Ansatzbildung, während die zirkonoxid- und eisenoxidhaltigen Vergleichssteine ansatzfrei waren und die zirkonoxidfreien, aber eisenoxidhaltigen Vergleichssteine zwar bereichsweise Ansatzbildung zeigten, wobei im letztgenannten Fall der Ansatz aber in weiten Bereichen abgefallen war.

Beispiel 2:

Nach der Vorgehensweise von Beispiel 1 wurden 10 Probesteine der dort angegebenen Zusammensetzung nach der Erfindung mit Zirkonoxidgehalten von 0,5 bis 5 Gew.-%, in gleichmäßigen Abständen, hergestellt. Anschließend wurde die Ansatzbildung wie folgt mit einem Klinkerhaftungstest gemessen:

Jeweils zwei Kuben mit einer Kantenlänge von 7 cm wurden unter Zwischenschalten von Zementrohmehlpastillen aufeinandergelegt und in einem elektrogeheizten Naber-Ofen 5 Stunden lang einer Temperatur von 1450° C ausgesetzt. Nach dem Erkalten wurde die Haftfestigkeit zwischen dem Zementklinker und den Steinen durch Zugbeanspruchung der beiden Kuben ermittelt. Dabei ergab sich die in der Zeichnung gezeigte Abhängigkeit zwischen Haftfestigkeit, damit auch Ansatzbildung, und $ZrO_2$-Zusatz.

Aus dem in der Zeichnung gezeigten Diagramm folgt, daß das Optimum der Ansatzbildung bei einem $ZrO_2$-Gehalt von 1 bis 2 Gew.-% liegt, sich hingegen noch gute Ansatzbildung über den gesamten erfindungsgemäß vorgesehenen Bereich von 0,5 bis 4,5 Gew.-% beobachten läßt.

Beispiel 3:

Nach der Vorgehensweise und mit der Magnesiaspinellzusammensetzung von Beispiel 1 wurden 1 Kubus mit einer Kantenlänge von 7 cm, wie in Beispiel 2, eines Feuerfeststeines mit einem $ZrO_2$-Zusatz von 2 % und ein zirkonoxidfreier Vergleichsstein hergestellt. Anschließend wurde die Penetrationstiefe des Steines durch die Zementklinkerschmelze entsprechend der Vorgehensweise von Beispiel 1 bestimmt. Dabei zeigte sich nach zwölfstündiger Erhitzung eine Verringerung der Penetrationstiefe von 50 % beim $ZrO_2$-haltigen Stein nach der Erfindung, verglichen mit dem zirkonoxidfreien Stein.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

**Patentansprüche**

1. Feuerfestmasse, insbesondere für einen Feuerfeststein zum Ausmauern von Drehrohröfen für die Zementindustrie, auf Magnesiaspinellbasis, mit einem Gehalt von 10 bis 50 Gew.-% Spinellklinker ($MgO.Al_2O_3$), 50 bis 90 Gew.-% Sintermagnesia und einem Gehalt von 0,5 bis 4 Gew.-%, bezogen auf die Gesamtmenge von Spinellklinker und Sintermagnesia, zu 100 Gew.-% genommen, an einem ansatzbildungsfördernden Metalloxid, dadurch gekennzeichnet, daß das Metalloxid Zirkonoxid ist und in einem Korngrößenbereich von < 0,1 mm vorliegt.

2. Feuerfestzusammensetzung nach Anspruch 1, dadurch gekennzeichnet, daß das Zirkonoxid in einem Korngrößenbereich von < 0,06 mm vorliegt.

3. Feuerfestzusammensetzung nach Anspruch 1, dadurch gekennzeichnet, daß der Zirkonoxidgehalt 1 bis 2 Gew.-% beträgt.

4. Feuerfeststein, insbesondere zur Ausmauerung von Drehrohröfen für die Zementindustrie, hergestellt unter Verwendung der Feuerfestzusammensetzung nach einem der vorangehenden Ansprüche.

## Claims

1. A refractory material, more particularly for a refractory brick for lining rotary tubular kilns for the cement Industry, on a magnesia spinel basis, having a content of 10 to 50% by weight of spinel clinker ($MgO.Al_2O_3$), 50 to 90% by weight of sintered magnesia and a content of 0.5 to 4% by weight - based on the total quantity of spinel clinker and sintered magnesia, taken as 100% by weight - of a metal oxide promoting the formation of a coating, characterised in that the metal oxide is zirconium oxide and is present in a particle size range of < 0.1 mm.

2. A refractory composition according to claim 1, characterised in that the zirconium oxide is present in a particle size range of < 0.06 mm.

3. A refractory composition according to claim 1, characterised in that the zirconium oxide content is 1 to 2% by weight.

4. A refractory brick, more particularly for lining rotary tubular kilns for the cement industry, made using the refractory composition according to any one of the preceding claims.

## Revendications

1. Masse réfractaire, en particulier pour pierres réfractaires destinées au revêtement de maçonnerie de fours tubulaires rotatifs pour l'industrie du ciment, à base de spinelles magnésiens, à teneur de 10 à 50 % en poids de clinkers de spinelles ($Mgo.Al_2O_3$), 50 à 90 % en poids de magnésie frittée et d'une teneur de 0,5 à 4 % en poids, rapportée à la quantité totale de clinkers de spinelles et de la magnésie frittée, prise pour 100 % en poids, en un oxyde métallique conduisant à la formation de dépôt, caractérisé par le fait que l'oxyde métallique est l'oxyde de zirconium et est présent en grosseur de grains d'un domaine de moins de 0,1 mm.

2. Composition réfractaire selon la revendication 1, caractérisée par le fait que l'oxyde de zirconium est présent en une grosseur de grains d'un domaine de moins de 0,06 mm.

3. Composition réfractaire selon la revendication 1, caractérisée par le fait que la teneur en oxyde de zirconium est comprise entre 1 et 2 % en poids.

4. Brique réfractaire pour le revêtement de maçonnerie de fours tubulaires rotatifs pour l'industrie du ciment, fabriquée en utilisant la composition réfractaire selon l'une des revendications précédentes.